# EUROPEAN PATENT SPECIFICATION

(11) **EP 2 522 991 B1**
(45) Date of publication and mention of the grant of the patent: **17.02.2021**
(21) Application number: 11003907.0
(22) Date of filing: 12.05.2011
(51) Int. Cl.: G01N 21/95, G01N 21/94, F24S 40/20, F24S 40/00

(54) **Device for inspection of a solar panel arrangement**
Vorrichtung zur Untersuchung einer Solarkollektoranordnung
Dispositif d'inspection d'un agencement de panneau solaire

(43) Date of publication of application: 14.11.2012
(73) Proprietor: FOCS Holding GmbH, 40215 Düsseldorf (DE)
(72) Inventor:
(74) Representative: Sparing, Rolf Klaus

(56) References cited:
- EP-A1- 2 172 390
- EP-A1- 2 366 964
- WO-A1-2010/073860
- DE-A1-102010 008 131
- US-A1- 2008 094 081

## Description

The invention relates to a device for inspection of a solar panel arrangement. The invention further relates to a method for determining an anomaly in an installed photovoltaic panel.In the last years, the use of solar panels for the collection of solar energy and conversion into electrical energy has become a common practice. In solar power plants, large numbers of solar panels are mounted on supporting carriers and disposed in an array-like arrangement, usually forming long rows of solar panels neighbouring each other. In order to maximize the yield of collected solar energy, surfaces of the solar panels are alligned towards the sun and therefore inclined with respect to the horizontal. Usually, the collecting surfaces of the solar panels are fully exposed to environmental conditions. Contamination of the solar panel surfaces with dust, sand, snow, leaves and branches of plants, and other residues due to environmental influences are a known problem, causing reduction of the gained electrical energy. Therefore, periodic cleaning of the panel surfaces is necessary in order to achieve a high level of energy production. Besides this, there is further need for maintenance of solar panels especially in solar power plants, e.g. periodic examination of the panels for mechanical or electrical defects. However, manual maintenance like cleaning or examination of a large number of solar panels is costly in terms of time and labour. Furthermore, manual cleaning or inspection of solar panel surfaces is tedious work accompanied by physical exhaustion and inattentiveness of the workforce, eventually leading to fluctuations in terms of cleaning and inspection quality.

In order to overcome these deficiencies, cleaning devices for cleaning of solar panel arrangements have been proposed, which are configured to automatically clean the collecting surfaces of solar panel arrangements by use of brushes, wipers, cleaning fluids, etc., and which have to be used in pre-described time intervals in order to maintain a high level of energy production. However, these known cleaning devices do not allow for inspection of the panel surface in order to determine residual pollutions or in order to identify mechanical or optical defects of the solar panels.

DE 10 2008 052 223 A1 describes a luminescence scanner for detection of physical properties of semi conductor circuits, e.g. in solar cell production. The luminescence scanner comprises a LED light source and a CCD-type camera. The semi conductor surface is exposed by light generated by the LED light source, thus stimulating the generation of luminescence light by the semi conducting surface. The CCD camera is used to gather the generated luminescence light in order to identify physical properties of the examined semi conductor surface.

DE 199 14 115 A1 describes a system for analysis of defects of silicon wafers or solar cells. The system comprises a CCD-camera to collect data like e.g. morphology, crystalline structure, color, etc. of a examined silicon wafer surface.

US 2008/0094081 A1 describes a device for inspection of a solar panel arrangement, comprising an optical detection device formed by a linear arrangement of optical sensors which are configured to extend over a width of the solar panel arrangement, means to move the linear arrangement of optical sensors across a solar panel arrangement and a feedback control circuit that is used to control the movement of the linear arrangement of optical sensors. The device additionally comprises linear probe arrangements, to detect defects of the solar panel arrangement that can be moved along magnet tracks. The solar panel to be inspected is placed on a chuck that supports the solar panel during inspection. Disadvantageously the shown device is not configured to inspect a solar panel arrangement at its place of installation.

EP 2 366 964 A1 describes a system and a method for cleaning a solar panel arrangement. The system comprises a plurality of autonomous mobile robots having a chassis with means for a movement of the robot on a surface of a solar panel arrangement. The robot further comprises means for cleaning a surface of a solar panel arrangement and a linear arrangement of optical sensors which are connected to a control unit to provide the position of the robot and to direct the robot along the surface of a solar panel arrangement. The optical sensors are joined to the robot by an extendable arm which will provide permanent contact of the optical sensors to the edge of the reflective surface of the solar panel arrangement.

DE 10 2010 008 131 A1 describes a cleaning device for solar panel arrangements comprising an optical detection device configured as a camera being installed next to a cleaning head of the cleaning device, means for moving the cleaning unit with respect to a surface of the solar panel arrangement, wherein the optical detection device is configured to detect the state of pollution on the solar panel arrangement or the cleaning result after cleaning.

US 2011/0137458 A1 (WO 2010/073860 A1) describes a device for inspection of a solar panel arrangement. The device comprises an autonomous arranging robot that is designed to move and apply an autonomous cleaning robot to a surface of a solar panel arrangement. The arranging robot features an optical sensor for measuring a distance to a surrounding object that is designed as a 3D laser scanner, an omnidirectionally movable camera and means for moving the arranging robot between solar panels. The arranging robot can either be operated remotely by an operator in a management center or by a management robot, wherein the communication is carried out by a wireless connection.

It is the object of the invention to provide a device for inspection of a solar panel arrangement, which allows for surface inspection of solar panel arrangements at the place of installation. It is further the object of the invention to provide a method for determining an anomaly in an installed photovoltaic panel, which can be performed at the place of installation of the photovoltaic panel.

This object is achieved by a device according to claim 1, the use of a device according to claim 11, and a method according to claim 12.

The device for inspection of a solar panel arrangement comprises an optical detection device,means for moving the optical detection device with respect to a surface of the solar panel arrangement and an evaluation unit for analysis of image data of the solar panel arrangement surface grabbed by the optical detection device, wherein the optical detection device is configured to detect environmental pollutions and/or defects within or of the surface of the solar panel arrangement. According to the invention the optical detection device comprises a contact image scanner. It turned out that detection devices of the contact image scanner type are suited for optical detection of a broad range of pollutions and defects of solar panels. At the same time, a contact image scanner device is capable to take pictures of the examined surface in a very small distance, typically less than 1 cm, therefore allowing a very compact size of the optical detection device. According to a configuration according to the invention, the distance between the scanner device and the examined surface exceeds the typical distance of about 1 cm and ranges between 1.5 cm and 4 cm, preferably between 1.8 cm and 3 cm and still more preferably between 2.0 cm and 2.5 cm such that a most preferred distance of 2.2 cm can be achieved. The increased distance allows to avoid screw heads, screws, rails, bolts and other items protruding from the surface to be inspected. Such items may exceed the typical distance of 1 cm and accordingly damage the scanner unit. In order to achieve the same scanning performance as when arranged at a typical distance, a scanner inspection enhancement arrangement according to the invention is provided allowing to detect defects in an increased distance. Such enhancement arrangement according to the invention is configured as optical lens provided in front of said contact image scanner device. A preferred embodiment is an evaluation module implemented in an analysis software allowing for deeper inspection of an image located at an increased distance as mentioned above. As a result, the optical detection device allows to reliably inspect surfaces having barriers or extensions oriented toward the optical path of the optical detection device. Said means for moving the optical detection device expediently allow for preferably autonomous movement of the optical detection device in such a way, that at least the complete light collecting surface of the solar panel arrangement is accessible. Preferably the optical detection device is configured to identify pollutions and/or defects selected from the group comprising deposits on the surface, dark and/or light colored deposits, moss, lichen, clusters of dust, dirt and/or pollen, snow, leaves, fluids, cleaning fluids, water with dirt remains, sparkles of fluids, scratches, cracks, deformations, and delamination of solar panel parts. Preferably, identification of pollutions and/or defects is achieved by recording optical data of the surface by the optical detection device and processing of the recorded optical data to locate optically anomalous areas of the surface. One will have to note that alterations located within the surface encompass all alterations that can optically be detected, and accordingly not only comprises residues on the top surface, but also defects occurring in and/or below the top surface, but visible for example due to the transparency of the surface made of glass or plastic.

Another advantageous aspect of the claimed invention is the possibility to identify and process information assigned to or positioned at specific portions of a panel, and in particular below a covering sheet such as glass. Due to the growing dimensions of photovoltaic power plants as well as of photovoltaic panels or modules, a possibility to automatically detect the presence and position of specific panels within a plant is of great importance. The optical detection device not only allows to scan defects in or below the surface of a panel, but also to retrieve information and data stored in different, readable manner on or below the surface of the panel. Such data may be an ID code such as a serial number or a combination of digits and letters, but also a binary code such as a matrix code. The code may be positioned on tags assigned to an exterior surface of the panel. Preferably, the code is located below the surface of the panel and may be produced together with the circuitry and cells or at a later stage. It is no longer necessary to retrieve the code by human inspection. Advantageously, the optical detection device is assigned a code identification unit that can be either located within the device for inspection of a solar panel arrangement or be located remote and provided with - for example wireless - data exchange interfaces. Accordingly, according to a preferred aspect, every panel or module of a plant may thus be identified and located.

This allows the operator of the plant to diligently determine lost or stolen panels. This further allows the producer of the panels of the plant to reliably identify panels and determine whether these are subject to given guarantees. This still further allows the producer of the panels to make remote quality inspections of panels and to correlate inspection and production using the code. Furthermore, tracking of periodic cleaning of each panel is possible such that even after production, continuous quality reporting is possible, and may be correlated to energy output values of the panels if available. Thus, a method to control the output power of a photovoltaic plant or a photovoltaic panel or module is proposed using the device for inspection of a solar panel arrangement according to the invention.

Preferably the optical detection device comprises a linear arrangement of optical sensors, thus allowing for concurrent inspection of an essentially one-dimensional section of the solar panel arrangement surface. Expediently, the optical detection device is moved with respect to the solar panel arrangement in a direction perpendicular to the linear arrangement of optical sensors, leading to coverage of a two-dimensional section of the surface during time. This allows for efficient inspection of solar panel arrangement surfaces of different size and shape.

According to a preferred embodiment of the invention, the optical detection device comprises at least one light source, allowing usage of the optical detection device independently of any external light sources, especially sun light. This advantageously allows usage of the detection device during night time when the solar panel arrangement is inactive. Furthermore, use of a comprised light source enhances identification of pollutions and/or defects due to the light source properties being known.

In a preferred embodiment of the inspection device, the optical detection device comprises a plurality of linear scanner devices. Arrangement of a number of linear scanner devices in such a way that a one-dimensional area of the solar panel surface is covered allows for easy and flexible adjustment of the optical detection device to solar panel arrangements of different width. Furthermore, the use of standardized linear scanner devices of fixed length reduces the total production costs of the optical detection device. Preferably the optical detection device is configured to extend over a width of the solar panel arrangement without gap, thus allowing to exhaustively scan the total surface of the solar panel arrangement by one single movement of the optical detection device in a direction perpendicular to said width of the solar panel arrangement.

Preferably, the means for moving the optical detection device are designed as an autonomously moveable device. In a particularly preferred embodiment, the optical detection device is attached to an autonomously moveable robot device. In an alternative, also preferred embodiment, the means for moving the optical detection device are designed as a remotely controllable device. It has to be understood, that the means for moving the optical detection device may also be configured to be switchable between remotely controlled and autonomous movement.

Expediently the inspection device comprises an evaluation unit for analysis of grabbed image data of the solar panel arrangement surface, preferably allowing for in situ data analysis in order to identify pollutions or mechanical defects.

In a preferred embodiment, the inspection device further comprises means for cleaning the solar panel arrangement surface. Advantageously, the optical detection device and the means for cleaning are arranged in such a way that the optical detection device scans already cleaned areas of the solar panel arrangement, allowing for immediate reiteration of the cleaning sequence in case of remaining pollutions. Furthermore, previous cleaning of the scanned area greatly improves detection of defects of the solar panels, e.g. scratches or delamination of the panels. Furthermore, detection of defects below the covering surface of the solar panels is easier after cleaning, such that optical detection of very small defects is reliably possible such as hot spots or other damages, either in cells made from thin-film, mono-crystalline or poly cristallyne cells.

Preferably, the evaluation device is configured to control the means for moving the optical detection device and/or the means for cleaning the solar panel arrangement surface, thus allowing the inspection device to work autonomously.

In a preferred embodiment, the inspection device further comprises a communication device for transferring data to a control center. Particularly, the communication device may be used to transfer data after completion of a inspection sequence, e.g. during recharging of electric batteries of the inspection device.

A preferred method uses inspection devices allowing a detail scan of already installed photovoltaic panels, in particular also outside the production factory. The method comprises a first step of inspecting a panel to determine any anomaly such that one can make sure that all parts carrying no anomaly are in a full capacity of energy production. In a further step, the position and the nature of the determined anomaly is identified. If dirt or other deposits are determined to be the anomaly, a central processing unit will order the inspection device comprising a cleaning unit to clean again or with more intensity; otherwise, the central processing unit will order an external cleaning vehicle or personnel to proceed with cleaning. The position of the anomaly may be without impact on energy generation such that the determination of nature of the anomaly and/or the cleaning of the panel will not be necessary. Besides pollution being subject to cleaning, anomalies may be due to occured defects within a glass covering itself, such as a crack, or below the covering such as a cell deformation or broken contact. Some will not be detrimental to energy production, such as a sand grain located in the panel outside the collecting cell. According to a still further step, the anomaly is classified. This may be achieved using stored artificial intelligence such as a neuronal network. Should a fatal defect be determined, the central processing unit may indicate that a replacement - or maintenance - of the specific panel is intended, where the specific panel may be identified using a code stored within the surface of the panel and accordingly being detectable by the inspection device. A non-fatal defect may in turn be ignored.

Further advantages and features of the invention will become more apparent from a detailed consideration of the exemplary embodiments described hereinafter.

Two preferred exemplary embodiments of a device according to the invention are described hereinafter and explained in more detail with reference to the attached drawings.
- Fig. 1: shows a schematic view of a first embodiment of a inspection device according to the invention.
- Fig. 2: shows a side view of the inspection device according to Fig. 1.
- Fig. 3: shows a schematic view of a second embodiment of a inspection device according to the invention.
- Fig. 4: shows a side view of the inspection device according to Fig. 3.

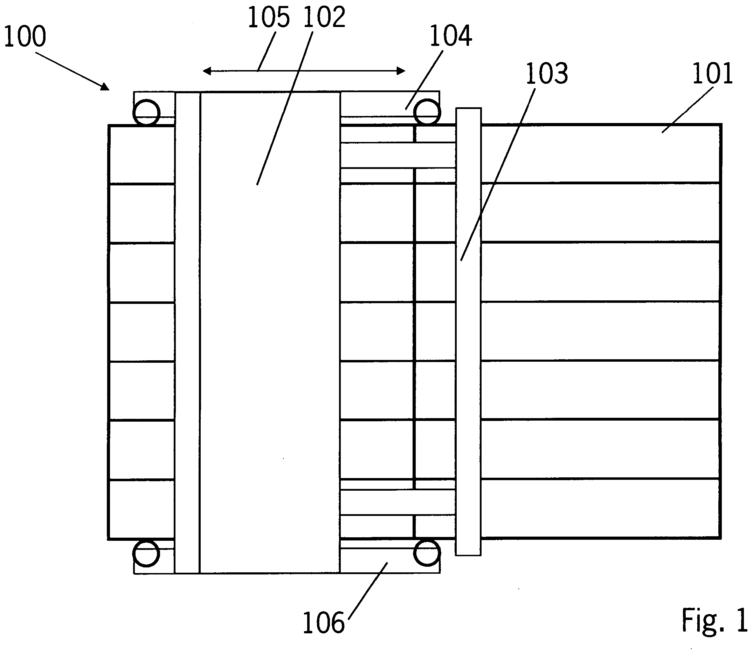

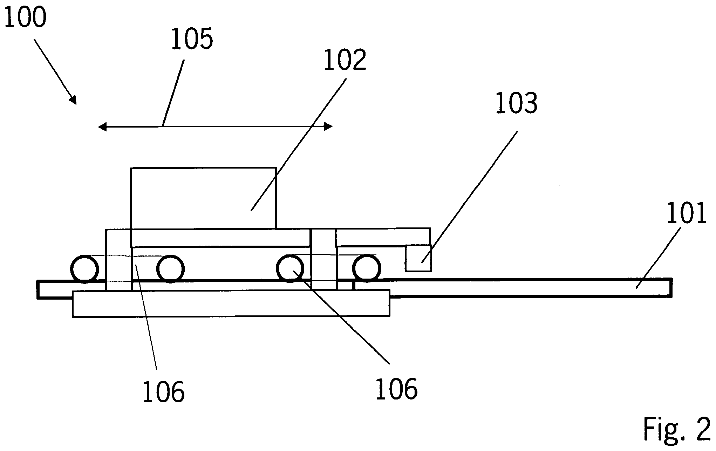

Fig. 1 and 2 show a device 100 for inspection of a solar panel arrangement 101. In practice, a solar panel will often also be designated as a module. The solar panel arrangement 101 comprises a large number of solar panels being arranged in a horizontal row. Each solar panel comprises a large number of solar cells for the collection of sun light and production of electric energy. The solar cells are located on a surface of the solar panels being exposed to sunlight. Of said large number of solar panels comprised in the solar panel arrangement 101, only two solar panels are shown in Fig. 1. One will have to understand that plants composed of photovoltaic panels may comprise e.g. about 25,000 photovoltaic panels (often designated as solar modules or photovoltaic modules), and each panel may comprise about 60 cells, with large ranges within the cited numbers may vary.

As the solar panel arrangement 101 is located at outdoor sites in order to collect sunlight and produce electric energy, the sun collecting surface of the solar panels is exposed to environmental conditions, such that the surface will eventually be covered by pollutions like e.g. dust, dirt, moss, lichen, pollen, leaves, snow and fluids like rain water or water comprising dirt remains. There is also a significant risk for the surface to be damaged by external influences, leading to scratches, cracks, deformations and/or delamination of the solar panels. Further, damages below the surface may also occur, e.g. delamination of cells or hot spots in cells as well as alterations in the electrical connections between cells located below an upper covering means such as a glass sheet or the like.

The device 100 comprises a mobile robot device 102 being removably attached to the solar panel arrangement 101. The mobile robot device 102 comprises a main body extending over a width of the solar panel arrangement 101, a first driving unit 104 and a second driving unit 106. The first driving unit 104 is attached to the main body of the robot device 102 at a first (in Fig. 1 upper) edge of the solar panel arrangement 101. The first driving unit 104 comprises driving means for moving the main body of the robot device with respect to the solar panel arrangement 102 as well as a guiding unit for guiding the driving unit 104 along the edge of the solar panel arrangement 102. The second driving unit 106 is attached to the main body of the robot device 102 at a second (in Fig. 1 lower) edge of the solar panel arrangement 101 and comprises driving means for moving the main body of the robot device with respect to the solar panel arrangement 102. By operating the first driving unit 104 and second driving unit 106, the mobile robot device 102 is moveable with respect to the solar panel arrangement 101 in directions 105.

An optical detection device 103 is attached to the main body of the robot device 102. The optical detection device 103 comprises a contact image scanner device which is guided by the robot device 102 in a very close distance to the surface of the solar panel arrangement 101, as to be seen in particular in Fig. 2. The optical detection device 103 extends over the width of the solar panel arrangement 101 without gap, allowing for inspection of an essentially one-dimensional area of the solar panel arrangement 101 at the same time. By moving the robot device 102 in directions 105, the complete collecting surface of the solar panel arrangement 101 can be scanned by the contact image scanner device. The contact image scanner device comprises a LED light source for illuminating the surface of the solar panel arrangement 101 and a light-sensing system for receiving reflected light from the surface. The reflected light is used to generate an image of the surface with an optical resolution of approximately 300 dpi (dots per inch) in direction of the width of the surface. The optical detection device 103 further comprises an image processing unit for analysis of the acquired image of the surface in order to identify pollutions and/or damages of the solar panel surface. Additionally, the optical detection device 103 comprises a data transmission interface for transmission of collected data to an external control center and/or for superposition of collected data with positional information, e.g. provided by the robot device 102, in order to facilitate external localization of pollutions and defects later on.

The device 100 further comprises a cleaning unit (not shown) for cleaning the surface of the solar panel arrangement 101. The cleaning unit is attached to the mobile robot device 102 and comprises a rotating brush spanning over the width of the solar panel arrangement. By moving the robot device 102 in directions 105, simultaneous cleaning of the solar panel surface and inspection for remaining pollutions and for mechanical damages of the solar panels is feasible. In particular, remaining pollutions on the surface may be autonomously detected and removed by the device 100 by iterating the cleaning process.

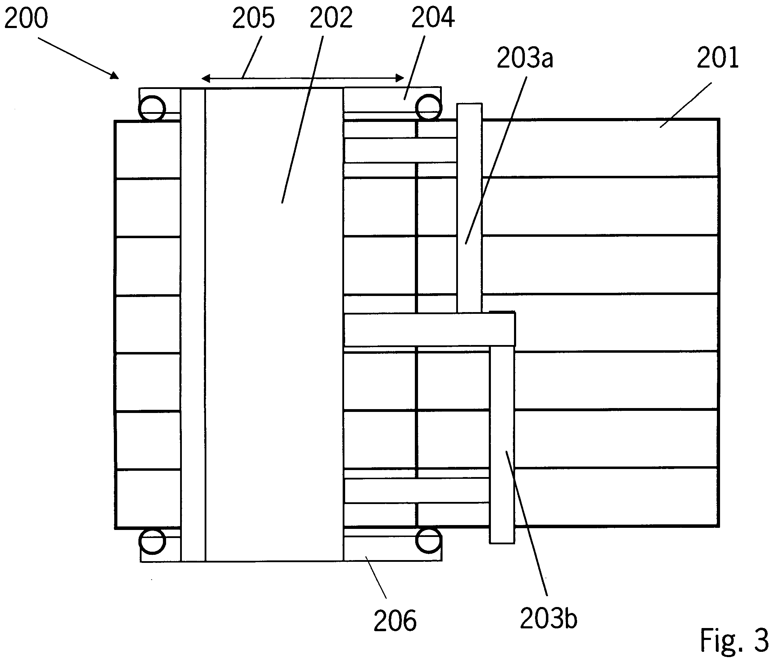

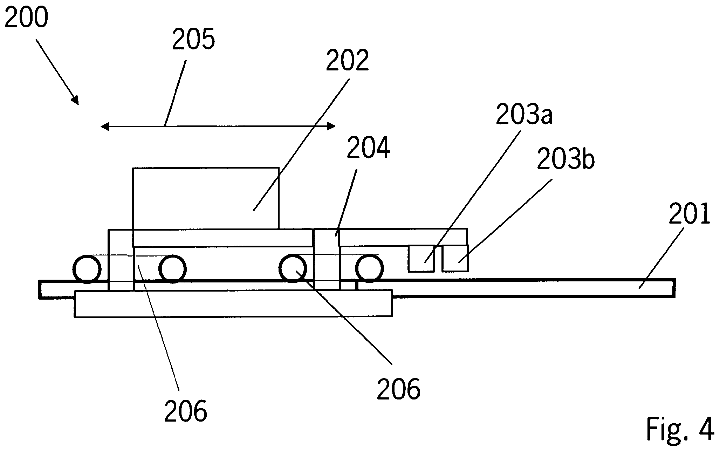

Fig. 3 and 4 show a second embodiment of a device 200 for inspection of a solar panel arrangement 201. Compared to the first embodiment shown in Fig. 1 and 2, reference numbers of analogue parts or equivalently working parts are incremented by 100.

Compared to the first embodiment, the second embodiment of the device 200 comprises a first optical detection device 203a and a second optical detection device 203b. As can be seen in Fig. 3 and 4, both optical detection devices 203a, 203b extend over the width of the solar panel arrangement 201 in such a way that each optical detection device 203a, 203b extends only over a part of the width of the solar panel arrangement 201, but the total width is covered by the combination of both detection devices 203a, 203b. The optical detection devices 203a, 203b are offset with respect to each other in the direction of movement of the robot device 202 and are placed in such a way that a middle part of the width of the solar panel arrangement 201 is covered by both the first optical detection device 203a and second optical detection device 203b.

It has to be understood that more than two optical detection devices may be used in the way described above to completely cover the width of a solar panel arrangement. This provides an easy way to adjust the device 200 to solar panel arrangements of different width by using preconfigured optical detection devices of given length.

It has to be understood that a large variety of defects or pollutions may be detected with a device according to the invention. According to a advantageous aspect, all pollutions and alterations provided on or at a level of the top surface of a panel can be detected, such as dirt, residuals, weather remains, snow, frozen patterns, tags fixed to the surface by intention or not, leaves, pollen, bird excrements, and any other item that may be deposited thereon. According to a further advantageous aspect, all alterations within the top surface of a panel can be detected, such as scratches, bubbles, quality defects, cracks, colored areas, gaps, protruding parts such as electrical contacts or the like. According to a still further advantageous aspect, all alterations provided below a level of the top surface of a panel can be detected, such as cells and contacts, in particular damaged cells or cells showing anomalies, or embedded penetrations such as water or other pollutions that may have overcome the sealing of a panel. According to a still further advantageous aspect, information provided on or preferably in the panel may be recognized, read, understood, provided for local or remote control unit and used in particular for identification and localization of the specific panel or a specific cell or portion of the panel and of any relating information concerning inspection such as specific defects.

The top surface of a panel may as well be embodied as a glass sheet or any other material having a suitable transparent property. Besides flat glass used in a panel, other suitable material can be used such as polyvinyl fluoride, polyethylene terephthalate or laminated composites such as sheets or layers of above or other suitably transparent material.

It has to be understood that the distance between the optical detection device and the surface of the panel may be adjusted to meet specific features of the panel such as protruding screws, overlapping edges and the like. Expediently, a unit for adapting the recognizing system in response to amended distances is provided to securely detect the retrieved data. In particular, the unit for adapting the recognizing system comprises optical support arrangement such as lenses or illumination devices, but additionally, an adapting unit processing the retrieved data in a computer system may be provided such that any unintentional change of height may automatically be corrected.

## Claims

1. Device for inspection of a solar panel arrangement, comprising
an optical detection device,
means for moving the optical detection device with respect to a surface of the solar panel arrangement, and
an evaluation unit for analysis of image data of the solar panel arrangement surface grabbed by the optical detection device,
wherein the optical detection device is configured to detect alterations including environmental pollutions and defects located within the surface of the solar panel arrangement, wherein the optical detection device comprises a contact image scanner device, **characterized in that** the distance between the contact image scanner device and the examined surface of the solar panel arrangement ranges between 1.5 cm and 4 cm, and
that a scanner enhancement arrangement configured as optical lens is provided in front of said contact image scanner device.

2. Device as claimed in claim 1, **characterized in that** the optical detection device comprises a linear arrangement of optical sensors.

3. Device as claimed in one of claims 1 to 2, **characterized in that** the optical detection device comprises at least one light source.

4. Device as claimed in one of claims 1 to 3, **characterized in that** the optical detection device comprises a plurality of linear scanner devices.

5. Device as claimed in one of claims 1 to 4, **characterized in that** the optical detection device is configured to extend over a width of the solar panel arrangement without gap.

6. Device as claimed in one of claims 1 to 5, **characterized in that** the means for moving the optical detection device are designed as an autonomously moveable device.

7. Device as claimed in one of claims 1 to 5, **characterized in that** the means for moving the optical detection device are designed as an remotely controllable device.

8. Device as claimed in one of claims 1 to 7, further comprising means for cleaning the solar panel arrangement surface.

9. Device as claimed in claim 8, **characterized in that** the evaluation device controls the means for moving the optical detection device and/or the means for cleaning the solar panel arrangement surface.

10. Device as claimed in one of claims 1 to 9, further comprising a communication device for transferring data to a control center.

11. Use of a device as claimed in one of claims 1 to 10 for cleaning and/or inspection of a solar power plant.

12. Method for determining an anomaly in an installed photovoltaic panel influencing the energy production of the photovoltaic panel, comprising
inspecting the panel with a device for inspection of a solar panel arrangement as claimed in one of claims 1 to 10;
identifying the panel using a code stored within the surface of the panel and identifying the nature of an anomaly; and
classifying the anomaly and determining the impact of the classified anomaly on energy production.

13. Method as claimed in claim 12, determining whether the classified anomaly corresponds to a defect or not.

14. Method as claimed in claim 12 or 13, wherein the optical detection device retrieves information and data stored in different readable manner on or below the surface of the solar panel arrangement.

## Patentansprüche

1. Vorrichtung zum Untersuchen einer Solarkollektor-Anordnung, umfassend eine
optische Detektionsvorrichtung,
Mittel zum Bewegen der optischen Detektionsvorrichtung in Bezug auf eine Oberfläche der Solarkollektor-Anordnung, und
eine Auswerteeinheit zur Analyse von durch die optische Detektionsvorrichtung erfassten Bilddaten der Oberfläche der Solarkollektor-Anordnung,
wobei die optische Detektionsvorrichtung konfiguriert ist, um Veränderungen einschließlich Umweltverschmutzungen und Defekten, die sich innerhalb der Oberfläche der Solarkollektor-Anordnung befinden, zu erkennen,
wobei die optische Detektionsvorrichtung eine Kontaktbild-Abtastvorrichtung umfasst,
**dadurch gekennzeichnet,**
**dass** der Abstand zwischen der Kontaktbild-Abtastvorrichtung und der untersuchten Oberfläche der Solarkollektor-Anordnung zwischen 1,5 cm und 4 cm beträgt, und
**dass** eine als optische Linse konfigurierte Abtastverbesserungsvorrichtung vor der Kontaktbild-Abtastvorrichtung vorgesehen ist.

2. Vorrichtung nach Anspruch 1, **dadurch gekennzeichnet, dass** die optische Detektionsvorrichtung eine lineare Anordnung von optischen Sensoren umfasst.

3. Vorrichtung nach einem der Ansprüche 1 bis 2, **dadurch gekennzeichnet, dass** die optische Detektionsvorrichtung mindestens eine Lichtquelle umfasst.

4. Vorrichtung nach einem der Ansprüche 1 bis 3, **dadurch gekennzeichnet, dass** die optische Detektionsvorrichtung eine Vielzahl von linearen Abtastvorrichtungen umfasst.

5. Vorrichtung nach einem der Ansprüche 1 bis 4, **dadurch gekennzeichnet, dass** die optische Detektionsvorrichtung konfiguriert ist, um sich lückenlos über eine Breite der Solarkollektor-Anordnung zu erstrecken.

6. Vorrichtung nach einem der Ansprüche 1 bis 5, **dadurch gekennzeichnet, dass** die Mittel zum Bewegen der optischen Detektionsvorrichtung als eine autonom bewegliche Vorrichtung ausgebildet sind.

7. Vorrichtung nach einem der Ansprüche 1 bis 5, **dadurch gekennzeichnet, dass** die Mittel zum Bewegen der optischen Detektionsvorrichtung als eine fernsteuerbare Vorrichtung ausgebildet sind.

8. Vorrichtung nach einem der Ansprüche 1 bis 7, ferner umfassend Mittel zum Reinigen der Oberfläche der Solarkollektor-Anordnung.

9. Vorrichtung nach Anspruch 8, **dadurch gekennzeichnet, dass** die Auswerteeinheit die Mittel zum Bewegen der optischen Detektionsvorrichtung und/oder die Mittel zum Reinigen der Oberfläche der Solarkollektor-Anordnung steuert.

10. Vorrichtung nach einem der Ansprüche 1 bis 9, ferner umfassend eine Kommunikationsvorrichtung zum Übertragen von Daten an ein Kontrollzentrum.

11. Verwendung einer Vorrichtung nach einem der Ansprüche 1 bis 10 zum Reinigen und/oder zum Untersuchen eines Solarkraftwerks.

12. Verfahren zum Bestimmen einer Anomalie in einem installierten photovoltaischen Kollektor, die die Energieproduktion des photovoltaischen Kollektors beeinflusst, umfassend
Untersuchen des Kollektors mit einer Vorrichtung zum Untersuchen einer Solarkollektor-Anordnung nach einem der Ansprüche 1 bis 10;
Identifizieren des Kollektors mit Hilfe eines Codes, der in der Oberfläche des Kollektors hinterlegt ist, und Identifizieren der Art einer Anomalie; und
Klassifizieren der Anomalie und Bestimmen der Auswirkung der klassifizierten Anomalie auf die Energieproduktion.

13. Verfahren nach Anspruch 12, Bestimmen, ob die klassifizierte Anomalie einem Defekt entspricht oder nicht.

14. Verfahren nach Anspruch 12 oder 13, wobei die optische Detektionsvorrichtung Informationen und Daten abruft, die in unterschiedlich lesbarer Weise auf oder unter der Oberfläche der Solarkollektor-Anordnung hinterlegt sind.

## Revendications

1. Dispositif d'inspection d'un agencement de panneau solaire, comprenant
un dispositif de détection optique,
des moyens pour déplacer le dispositif de détection optique par rapport à une surface de l'agencement de panneau solaire, et
une unité d'évaluation pour l'analyse des données d'image de la surface de l'agencement de panneau solaire saisies par le dispositif de détection optique,
dans lequel le dispositif de détection optique est configuré pour détecter des altérations telles que des pollutions environnementales et des défauts situés à l'intérieur de la surface de l'agencement de panneau solaire,
dans lequel le dispositif de détection optique comprend un dispositif de numérisation d'image de contact,
**caractérisé en ce**
**que** la distance entre le dispositif de numérisation d'image de contact et la surface à examiner de l'agencement de panneau solaire se trouve entre 1,5 cm et 4 cm, et
**que** un agencement d'amélioration de numérisation configuré comme une lentille optique est prévu à l'avant dudit dispositif de numérisation d'image de contact.

2. Dispositif selon la revendication 1, **caractérisé en ce que** le dispositif de détection optique comprend un agencement linéaire de capteurs optiques.

3. Dispositif selon la revendication 1 ou 2, **caractérisé en ce que** le dispositif de détection optique comprend au moins une source lumineuse.

4. Dispositif selon l'une des revendications 1 à 3, **caractérisé en ce que** le dispositif de détection optique comprend une pluralité de dispositifs de numérisation linéaire.

5. Dispositif selon l'une des revendications 1 à 4, **caractérisé en ce que** le dispositif de détection optique est configuré pour s'étendre sur une largeur de l'agencement de panneau solaire sans écart.

6. Dispositif selon l'une des revendications 1 à 5, **caractérisé en ce que** les moyens pour déplacer le dispositif de détection optique sont conçus comme un dispositif à déplacement autonome.

7. Dispositif selon l'une des revendications 1 à 5, **caractérisé en ce que** les moyens pour déplacer le dispositif de détection optique sont conçus comme un dispositif télécommandable.

8. Dispositif selon l'une des revendications 1 à 7, comprenant en outre des moyens pour nettoyer la surface de l'agencement de panneau solaire.

9. Dispositif selon la revendication 8, **caractérisé en ce que** le dispositif d'évaluation commande les moyens pour déplacer le dispositif de détection optique et / ou les moyens pour nettoyer la surface de l'agencement de panneau solaire.

10. Dispositif selon l'une des revendications 1 à 9, comprenant en outre un dispositif de communication pour transférer des données vers un centre de commande.

11. Utilisation d'un dispositif selon l'une des revendications 1 à 10 pour le nettoyage et / ou l'inspection d'une centrale solaire.

12. Procédé pour déterminer une anomalie dans un panneau photovoltaïque installé influençant la production d'énergie du panneau photovoltaïque, comprenant les étapes de
inspecter le panneau avec un dispositif d'inspection d'un agencement de panneau solaire selon l'une des revendications 1 à 10 ;
identifier le panneau à l'aide d'un code stocké dans la surface du panneau et identifier la nature d'une anomalie ; et
classer l'anomalie et déterminer l'impact de l'anomalie classée sur la production d'énergie.

13. Procédé selon la revendication 12, déterminant ou non si l'anomalie classée correspond ou non à un défaut.

14. Procédé selon l'une des revendications 12 ou 13, dans lequel le dispositif de détection optique récupère des informations et des données stockées de différentes manières lisibles sur ou sous la surface de l'agencement de panneau solaire.
